## Europäisches Patentamt
## European Patent Office
## Office européen des brevets

(19)

(11) Veröffentlichungsnummer : **0 029 931**
**B1**

(12) **EUROPÄISCHE PATENTSCHRIFT**

(45) Veröffentlichungstag der Patentschrift :
25.07.84

(21) Anmeldenummer : **80106828.9**

(22) Anmeldetag : **06.11.80**

(51) Int. Cl.³ : **C 08 L 67/00**

(54) Spritzgussverfahren zur Herstellung kristalliner Polyethylenterephthalat-Formkörper.

(30) Priorität : **19.11.79 US 95274**

(43) Veröffentlichungstag der Anmeldung :
**10.06.81 Patentblatt 81/23**

(45) Bekanntmachung des Hinweises auf die Patenterteilung : **25.07.84 Patentblatt 84/30**

(84) Benannte Vertragsstaaten :
**CH DE FR GB IT LI NL SE**

(56) Entgegenhaltungen :
**FR-A- 2 285 435**
**FR-A- 2 354 370**
**FR-A- 2 376 181**
**Die Akte enthält technische Angaben, die nach dem
Eingang der Anmeldung eingereicht wurden und die
nicht in dieser Patentschrift enthalten sind.**

(73) Patentinhaber : **BAYER AG
Konzernverwaltung RP Patentabteilung
D-5090 Leverkusen 1 Bayerwerk (DE)**

(72) Erfinder : **Bier, Peter, Dr.
Bodelschwinghstrasse 18
D-4150 Krefeld 1 (DE)**

EP 0 029 931 B1

# 0 029 931

**Beschreibung**

Die Erfindung betrifft ein Spritzgußverfahren, mit dem es gelingt, Polyethylenterephthalat (PET) bei relativ niedriger Formtemperatur zu kristallinen Formkörpern zu verarbeiten.

Die beiden Polyalkylenterephthalate, die als thermoplastische Formmassen die größte Bedeutung erlangt haben, sind Polyethylenterephthalat (PET) und Polybutylenterephthalat (PBT).

PBT hat als Spritzgußmaterial Eingang in den Markt gefunden, weil es neben Steifigkeit, Härte, Abriebfestigkeit, dynamischer und thermischer Belastbarkeit gute Verarbeitbarkeit besitzt : Es kann bei relativ niedriger Formtemperatur mit kurzer Zykluszeit verspritzt werden.

PET ist zwar ein hervorragender Faserrohstoff, kann aber für die Herstellung von Spritzgußartikeln problemlos nur dort eingesetzt werden, wo eine hohe Kristallinität nicht unbedingt erwünscht ist oder sich gar störend auswirkt, z. B. bei der Herstellung transparenter Formkörper : In amorphem Zustand (also transparent) fällt PET an, wenn es bei Formtemperaturen von 50-70 °C verarbeitet wird. Kristallines PET erhält man dagegen erst bei Formtemperaturen von 140 °C ; d. h. während für die Erzeugung von PBT-Formkörpern und von amorphen PET-Formkörpern die üblichen wasserbeheizten Formen genügen (die bis zu etwa 100 °C beheizt werden können), sind für die Herstellung kristalliner PET-Formkörper ölbeheizte Formen nötig. Nicht zuletzt dieser Umstand hat der weiteren Anwendung von PET-Formmassen bislang im Wege gestanden.

Zwar kann man durch Nachtempern erreichen, daß amorphes PET in den kristallinen Zustand übergeht, doch versteht sich von selbst, daß dies keine geeignete Methode für eine großtechnische Fertigung ist. Es hat daher nicht an Bemühungen gemangelt, PET so zu modifizieren, daß es in wasserbeheizten Formen zu kristallinen Spritzgußartikeln verarbeitet werden kann, doch hat sich bis heute keine Methode technisch durchsetzen können.

Hohe Kristallinität garantiert Härte und Formbeständigkeit auch bei höheren Temperaturen. Diese hohe Kristallinität sollte so rasch wie möglich erreicht werden, um optimale Eigenschaften sicherzustellen. Außerdem bestimmt die Verweilzeit in der Form die Länge des Spritzgußzyklus und damit die Wirtschaftlichkeit des Spritzgußverfahrens. Selbst bei hohen Formtemperaturen erscheinen diese Zyklen noch als zu lang und haben daher eine weitere Ausweitung des Einsatzes von PET-Formmassen verhindert.

Es bestand also ein Bedürfnis nach einer Methode, die die geschilderten Nachteile vermeidet.

Überraschenderweise wurde nun gefunden, daß man PET mittlerer Viskosität bei Formtemperaturen von 80 bis 120 °C zu Spritzgußartikeln hoher Kristallinität verarbeiten kann, wenn man dem PET ein bestimmtes Pfropfpolymerisat zusetzt.

Gegenstand der Erfindung ist also ein Verfahren zur Herstellung kristalliner Polyethylenterephthalat-Formkörper mittels Spritzguß bei Formtemperaturen von 80 bis 120 °C, vorzugsweise 80 bis 110 °C, dadurch gekennzeichnet, daß man Formmassen enthaltend.

I. 70 bis 98, vorzugsweise 80 bis 95, Gew.-% eines Polyethylenterephthalats, enthaltend mindestens 80 Mol-%, bezogen auf die Dicarbonsäure-Komponente, Terephthalsäurereste und mindestens 80 Mol-%, bezogen auf die Diolkomponente, Ethylenglykolreste, mit einer relativen Viskosität (gemessen in Phenol/o-Dichlorbenzol (Gewichtsverhältnis 60 : 40) bei 25 °C) von 1,28 bis 1,38,

II. 2 bis 30, vorzugsweise 5 bis 20, Gew.-% eines Pfropfpolymerisats aus
(A) 25 bis 95 Gewichtsteilen eines Copolymerisats von
(a) 75 bis 99,8 Gewichtsteilen eines $C_1$-$C_6$-Alkylacrylats,
(b) 0,1 bis 5 Gewichtsteilen eines Monomeren mit mindestens zwei nicht konjugierten olefinischen Doppelbindungen und
(c) 0 bis 40 Gewichtsteilen weiterer Monomerer,
als Pfropfgrundlage und
(B) 75 bis 5 Gewichtsteilen eines durch Polymerisation mindestens eines olefinischen ungesättigten Monomeren erhaltenen Harzes, das in Gegenwart von (A) hergestellt worden ist, und

III. 0 bis 300 Gew.-% Verstärkungsmittel, wobei sich die Gew.-%-angaben jeweils auf die Summe I + II beziehen,

verspritzt.

Ein geeignetes Maß für die Kristallinität der erhaltenen Formkörper ist die mittels Differentialthermoanalyse (DTA) bestimmte Nachkristallisationsenthalpie $\Delta H_{c\text{-post}}'$, gemessen bei einer Aufheizgeschwindigkeit von 20°/Minute : je kleiner $\Delta H_{c\text{-post}}$, desto größer die Kristallinität. Formkörper mit der größten erreichbaren Kristallinität weisen also einen $\Delta H_{c\text{-post}}$-Wert von Null auf. Die erfindungsgemäß hergestellten Formkörper besitzen $\Delta H_{c\text{-post}}$-Werte von weniger als 15, vorzugsweise weniger als 7.5, insbesondere als 3.5, Joule/g, während bei einer Formtemperatur von 100 °C aus reinem PET hergestellte Formkörper einen $\Delta H_{c\text{-post}}$-Wert von 23.1 Joule/g zeigen.

Die Polyethylenterephthalate I enthalten vorzugsweise mindestens 90 Mol-%, bezogen auf die Dicarbonsäurekomponente, Terephthalsäurereste und vorzugsweise mindestens 90 Mol-%, bezogen auf

2

0 029 931

die Diolkomponente, Ethylenglykolreste.

Die Polyethylenterephthalate I können neben Terephthalsäureresten bis zu 20 Mol-% Reste anderer aromatischer Dicarbonsäuren mit 6 bis 14 C-Atomen, aliphatischer Dicarbonsäuren mit 4 bis 8 C-Atomen und/oder cycloaliphatischer Dicarbonsäuren mit 8 bis 12 C-Atomen enthalten, wie z. B. Phthalsäure, Isophthalsäure, Naphthalin-2,6-dicarbonsäure, Phenyl-4,4'-dicarbonsäure, Adipin-, Sebacinsäure, Cyclohexandiessigsäure.

Die Polyethylenterephthalate I können neben Ethylenglykolresten bis zu 20 Mol-% anderer aliphatischer Diole mit 3 bis 12 C-Atomen, cycloaliphatischer Diole mit 6 bis 15 C-Atomen und/oder aromatischer Diole mit 6 bis 21 C-Atomen enthalten, z. B. Reste von Propan-1,3-diol, Butan-1,4-diol, Pentan-1,5-diol, Hexan-1,6-diol, Cyclohexan-1,4-dimethanol, 3-Methylpentandiol-2,4, 2-Methylpentandiol-2,4, 2,2,4-Trimethylpentandiol-1,3, 2-Ethyl-hexandiol-1,3, 2,2-Diethylpropandiol-1,3, Hexandiol-2,5, 1,4-Di-($\beta$-hydroxiethoxi)-benzol, 2,2-Bis-(4-hydroxicyclohexyl)-propan, 2,4-Dihydroxi-1,1,3,3-tetramethyl-cyclobutan, 2,2-Bis-(3-$\beta$-hydroxiethoxyphenyl)-propan und 2,2-Bis-(4-hydroxipropoxiphenyl)-propan.

Die Polyethylenterephthalate I können durch Einbau relativ kleiner Mengen von 3- oder 4-wertigen Alkoholen oder 3- oder 4-basischen Carbonsäuren, wie sie in der DE-OS-19 00 270 und der US-PS-36 92 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyethylenterephthalate I, die allein aus Terephthalsäure oder deren reaktionsfähigen Derivaten (z. B. deren Dialkylestern oder Anhydriden) und Ethylenglykol hergestellt worden sind.

Die Pfropfpolymerisate II werden durch Polymerisation von olefinisch ungesättigten Monomeren in Gegenwart des Präpolymeren (A) erhalten, wobei ein wesentlicher Teil der Monomeren auf das Präpolymere (A) aufgepropft wird. Die Herstellung derartiger Pfropfpolymerisate ist im Prinzip bekannt (R. J. Ceresa, Block and Graft Copolymers, Butterworth, London 1962).

Für die Zwecke der Erfindung werden Pfropfpolymerisate II bevorzugt, die kautschukelastische Eigenschaften besitzen, und deren Glasübergangstemperatur unterhalb von + 10 °C, insbesondere zwischen − 150 und − 20 °C, vorzugsweise zwischen − 80 und − 30 °C, liegt. Die Ermittlung der Glasünergangstemperatur kann dabei nach B. Vollmer, Grundriß der Makromolekularen Chemie, Seiten 406-410, Springer-Verlag, Heidelberg, 1962, erfolgen.

Bevorzugtes $C_1$-$C_6$-Alkylacrylat (a) ist n-Butylacrylat.

Bevorzugte Monomere (b) mit mindestens zwei nicht konjugierten Doppelbindungen pro Molekül sind Polyacryl- und Polymethacrylsäureester von mehrwertigen Alkoholen, insbesondere solchen mit 2 bis 8 C-Atomen und 2 bis 4 Hydroxylgruppen, z. B. Butylendiacrylat und -dimethacrylat, Trimethylolpropantrimethacrylat ; Di- und Trivinylbenzol, Vinylacrylat und -methacrylat, Alkylester ungesättigter Mono- und Dicarbonsäuren, wie z. B. Alkylacrylat und -methacrylat, Dialkylmaleat, -fumarat und -itaconat, Malein-, Fumar- und Itaconsäuremonoallylester ; Diallylester von Polycarbonsäuren, die keine polymerisationsfähige Doppelbindung enthalten.

Besonders bevorzugte Monomere (b) sind Butylendiacrylat, Allylmethacrylat und Diallylmaleat.

Bevorzugte weitere Monomere (c) sind Ethylen, Isopren, Vinylether, Butadien, Styrol, Vinylester, Vinylhalogenide, vinylsubstituierte heterocyclische Verbindungen wie Vinylpyrrolidon, Acrylnitril und Mischungen dieser Monomeren.

Bevorzugte olefinische ungesättigte Monomere zur Herstellung des Anteils (B) sind $C_1$-$C_4$-Alkylacrylate und -methacrylate, Styrol und Acrylnitril. Vorzugsweise enthalten diese zur Herstellung des Anteils (B) verwandten Monomeren mindestens 50 Gew.-% $C_1$-$C_4$-Alkylmethacrylat.

Es ist vorteilhaft, wenn die Pfropfpolymerisate einen beträchtlichen Gehalt an polaren Gruppen aufweisen. Zweckmäßig wählt man Produkte aus, die zu mehr als 10 Gew.-% aus (Meth-) Acrylsäureestern und (Meth-) Acrylnitril aufgebaut sind. Sofern der Gehalt an (Meth-)-Acrylestern mehr als 70 Gew.-% beträgt, verzichtet man zweckmäßig auf (Meth-) Acrylnitril als Baustein.

Bevorzugte Pfropfpolymerisate II sind solche aus

60-95 Gew.-% Pfropfgrundlage und
40- 5 Gew.-% Pfropfauflage, wobei die Pfropfgrundlage aus einem Monomerengemisch enthaltend
95-99,8 Gew.-% n-Butylacrylat,
0,1-2,5 Gew.-% Butylendiacrylat und
0,1-2,5 Gew.-% Allylmethacrylat oder Diallylmaleat und die Pfropfauflage zu
60-100 Gew.-% aus Methylmethacrylat und
40-0 Gew.-% anderer Monomerer erhältlich sind.

Die bevorzugten Pfropfpolymerisate II besitzen einen mittleren Teilchendurchmesser $d_{50}$ (gemessen mittels Ultrazentrifuge nach W. Scholtan, H. Lange, Kolloid. Z. u. Z. Polymere 250, 782-796 (1972)) von 0,2 bis 0,6, vorzugsweise 0,3 bis 0,5 μm.

Die Herstellung der Präpolymeren und die der Pfropfpolymerisate II erfolgt in üblicher Weise, vorzugsweise durch Emulsionspolymerisation mit üblichen radikalischen Initiatoren, Emulgatoren und Reglern in wäßriger Emulsion bzw. Dispersion. Die Herstellung geeigneter Pfropfpolymerisate ist beispielsweise in den deutschen Patentschriften 12 60 135 und 12 38 207 beschrieben.

3

Besonders bevorzugte Pfropfpolymerisate II lassen sich nach üblichen Emulsionspolymerisationsverfahren in mehreren Stufen aus N-Butylacrylat, 1,3-Butylendiacrylat und Diallylmaleat in erster Stufe und Methylmethacrylat in zweiter Stufe herstellen, wobei das bevorzugte Monomerverhältnis (bezogen aud Gewicht) etwa 79,2/0,4/0,4/20,0 beträgt.

Die Pfropfpolymerisate II und ihre Verwendung zur Verbesserung der Schlagzähigkeit von Polyestern einschließlich PET ist bekannt (US 38 08 180, 40 96 202, DE-AS 24 44 584). Allerdings entfalten die Pfropfpolymerisate ihre Schlagzähigkeits-verbessernde Wirkung in PET erst ab einer relativen Viskosität, die oberhalb der für unser PET I angegebenen Obergrenze liegt. Es hätte deshalb für den Fachmann nahegelegen, auf den Zusatz von Pfropfpolymerisat II zu solchem PET zu verzichten, in dem das Pfropfpolymerisat die Schlagzähigkeit nicht verbessert. Es war daher umso überraschender zu finden, daß der Zusatz von Pfropfpolymerisat II zu solchem PET die Verarbeitbarkeit — wie oben beschrieben — drastisch verbessert.

Bevorzugte Verstärkungsmittel III sind Glasfasern. Zusätzlich können den erfindungsgemäß zu verarbeitenden Formmassen aber auch Pigmente, Farbstoffe, Stabilisatoren, Nukleiermittel, UV-Absorben, Gleit- und Entformungsmittel zugesetzt werden.

Das Mischen der Komponenten I-III und eventuell weiterer Hilfs- und Zusatzstoffe kann auf übliche Weise, z. B. in Knetern oder Ein- bzw. Zweiwellenextrudern, erfolgen.

Die Spritzgußbedingungen für PET-Formmassen sind bekannt ; vgl. US-35 16 957 und Ervin J. Rubin, Injection Molding Theory and Praxis, Wiley Interscience, 1972.

Weiterer Gegenstand der Erfindung sind nach dem erfindungsgemäßen Verfahren erhaltene Spritzgußartikel.

In den folgenden Beispielen angegebene Teile bedeuten Gewichtsteile ; Prozentangaben beziehen sich auf das Gewicht.

## Beispiele

Es wurden folgende Materialien eingesetzt :

PET mit einer Intrinsic-Viskosität von 0,54 dl/g, gemessen als 0,5 %-ige Lösung in Phenol/Tetrachlorethan (Gewichtsverhältnis 1 : 1) bei 25 °C (entsprechend einer relativen Viskosität von 1,30) ;

Ein Pfropfpolymerisat entsprechend Beispiel 26 der US 40 96 202 auf Basis von n-Butylacrylat, 1,3-Butylendiacrylat, Diallylmaleat und Methylmethacrylat (« Pfropf ») und Kurzglasfasern.

Die Formmassen enthielten Mikrotalk als Nukleiermittel und weniger als 0,3 % Stabilisator.

Die Formmassen wurden bei einer Massetemperatur von 250 °C verspritzt ; die Formtemperatur betrug 100 °C.

Die Spritzgußartikel sollten in Bezug auf ihre Verwerfung geprüft werden. Zu diesem Zweck spritzte man Scheiben folgender Abmessungen :

10 cm Durchmesser, 3,18 mm Dicke (1/8 Zoll)
und
10 cm Durchmesser, 1,59 mm Dicke (1/16 Zool).

Die Zykluszeit betrug 20 sec.

Ein bei 150 °C durchgeführtes Nachtempern für 24 Stunden verursachte eine Verwerfung der Scheiben. Die Angabe in mm ist ein Maß für die Tiefe der erhaltenen konkaven Gebilde ; je niedriger die Zahlenangabe, desto höher der Kristallisationsgrad.

Die Menge der Bestandteile der geprüften Formmassen können der unten stehenden Tabelle entnommen werden.

### Tabelle

| | | Beispiel 1 (Teile) | Vergleich 1 (Teile) | Beispiel 2 (Teile) | Vergleich 2 (Teile) |
|---|---|---|---|---|---|
| PET | | 9 | 10 | 6,3 | 7,0 |
| Pfropf | | 1 | — | 0,7 | — |
| Glasfasern | | — | — | 3,0 | 3,0 |
| 3,18 mm Dicke | vor Tempern | 1,25 | 3,53 | 0,70 | 2,85 |
| | nach Tempern | 1,25 | 3,58 | 0,80 | 1,92 |
| 1,59 mm Dicke | vor Tempern | 2,05 | | 1,95 | 3,95 |
| | nach Tempern | 1,30 | | 2,75 | 4,44 |

## Ansprüche

1. Verfahren zur Herstellung kristalliner Polyethylenterephthalat-Formkörper mittels Spritzguß bei Formtemperaturen von 80 bis 120 °C, vorzugsweise 80 bis 110 °C, dadurch gekennzeichnet, daß man Formmassen enthaltend

I. 70 bis 98 Gew.-% eines Polyethylenterephthalats, enthaltend mindestens 80 Mol-%, bezogen auf Dicarbonsäure-Komponente, Terephthalsäurereste und mindestens 80 Mol-%, bezogen auf die Diolkomponente, Ethylenglykolreste, mit einer relativen Viskosität (gemessen in Phenol/o-Dichlorbenzol (Gewichtsverhältnis 60 : 40) bei 25 °C) von 1,28 bis 1,38,

II. 2 bis 30 Gew.-% eines Pfropfpolymerisates aus
(A) 25 bis 95 Gewichtsteilen eines Copolymerisats von
(a) 75 bis 99,8 Gewichtsteilen eines $C_1$-$C_6$-Alkylacrylats,
(b) 0,1 bis 5 Gewichtsteilen eines Monomeren mit mindestens zwei nicht konjugierten olefinischen Doppelbindungen und
(c) 0 bis 40 Gewichtsteilen weiterer Monomerer,
als Pfropfgrundlage und
(B) 75 bis 5 Gewichtsteilen eines durch Polymerisation mindestens eines olefinischen ungesättigten Monomeren erhaltenen Harzes, das in Gegenwart von (A) hergestellt worden ist, und

III. 0 bis 300 Gew.-% Verstärkungsmittel, wobei sich die Gew.-%-angaben jeweils auf die Summe I + II beziehen,

verspritzt.

2. Verfahren nach Anspruch 1, dadurch gekennzeichnet, daß man Formmassen verspritzt, die

80 bis 95  Gew.-% Komponente I,
5 bis 20  Gew.-% Komponente II und
0 bis 240 Gew.-%, bezogen auf die von Summe I + II, Komponente III, enthalten.

3. Verfahren nach Ansprüchen 1 oder 2, dadurch gekennzeichnet, daß man Formmassen verspritzt, deren Pfropfpolymerisat II aus

60-95 Gew.-% Pfropfgrundlage (A) und
40-5   Gew.-% Pfropfauflage besteht,

wobei die Pfropfgrundlage aus einem Monomerengemisch enthaltend 95-99,8 Gew.-% n-Butylacrylat,
0,1-2,5 Gew.-% Butylendiacrylat und
0,1-2,5 Gew.-% Allylmethacrylat oder Diallylmaleat und die Pfropfauflage zu

60-100 Gew.-% aus Methylmethacrylat und
40-0   Gew.-% anderer Monomerer erhältlich sind.

4. Verfahren nach Ansprüchen 1-3, dadurch gekennzeichnet, daß man Formmassen verspritzt, die als Komponente III Glasfasern enthalten.
5. Nach dem Verfahren gemäß Ansprüchen 1-4 erhaltene Spritzgußartikel.
6. Nach dem Verfahren gemäß Ansprüchen 1-4 erhaltene Spritzgußartikel, dadurch gekennzeichnet, daß sie eine mittels Differentialthermoanalyse zu bestimmende Nachkristallisationsenthalphie $\Delta H_{c\text{-post}}$ von weniger als 15 Joule/g besitzen.
7. Nach dem Verfahren gemäß Ansprüchen 1-4 erhaltene Spritzgußartikel, dadurch gekennzeichnet, daß sie eine mittels Differentialthermoanalyse zu bestimmende Nachkristallisationsenthalphie $\Delta H_{c\text{-post}}$ von weniger als 7,5 Joule/g besitzen.
8. Nach dem Verfahren gemäß Ansprüchen 1-4 erhaltene Spritzgußartikel, dadurch gekennzeichnet, daß sie eine mittels Differentialthermoanalyse zu bestimmende Nachkristallisationsenthalphie $\Delta H_{c\text{-post}}$ von weniger als 3,5 Joule/g besitzen.

**Claims**

1. Process for the production of crystalline polyethylene terephthalate mouldings by injection moulding at mould temperatures of 80 to 120 °C, preferably 80 to 110 °C, characterised in that moulding compositions containing

I. 70 to 98 % by weight of a polyethylene terephthalate containing at least 80 mol %, based on the dicarboxylic acid component, of terephthalate acid radicals and at least 80 mol %, based on the diol component, of ethylene glycol radicals, and having a relative viscosity (measured in phenol/o-dichlorobenzene (weight ratio 60 : 40) at 25 °C) of 1.28 to 1.38,

II. 2 to 30 % by weight of a graft polymer of
   (A) 25 to 95 parts by weight of a copolymer of
      (a) 75 to 99.8 parts by weight of a $C_1$-$C_6$-alkyl acrylate,
      (b) 0.1 to 5 parts by weight of a monomer containing at least two unconjugated olefinic double bonds, and
      (c) 0 to 40 parts by weight of other monomers,
as the graft base and
   (B) 75 to 5 parts by weight of a resin obtained by polymerisation of at least one olefinic unsaturated monomer, which resin has been prepared in the presence of (A), and

III. 0 to 300 % by weight of reinforcing agents, the percentages by weight each being based on the sum of I + II,

are injection-moulded.

2. Process according to Claim 1, characterised in that moulding compositions are injection-moulded which contain

80 to 95 % by weight of component I,
5 to 20 % by weight of component II and
0 to 240 % by weight, based on the sum of I + II, of component III.

3. Process according to Claims 1 or 2, characterised in that moulding compositions are injection-moulded of which the graft polymer II consists of

60-95 % by weight of the graft base (A) and
40-5 % by weight of the graft component,

the graft base being obtainable from a monomer mixture containing

95-99.8 % by weight of n-butyl acrylate,
0.1-2.5 % by weight of butylene diacrylate and
0.1-2.5 % by weight of allyl methacrylate or diallyl maleate,

and the graft component being obtainable from

60-100 % by weight of methyl methacrylate and
40-0 % by weight of other monomers.

4. Process according to Claims 1-3, characterised in that moulding compositions are injection-moulded which contain glass fibres as component III.

5. Injection-moulded articles obtained by the process according to Claims 1-4.

6. Injection-moulded articles obtained by the process according to Claims 1-4, characterised in that they have a post-crystallisation enthalpy $\Delta H_{c\text{-post}}$ of less than 15 Joules/g, as determined by differential thermoanalysis.

7. Injection-moulded articles obtained by the process according to Claims 1-4, characterised in that they have a post-crystallisation enthalpy $\Delta H_{c\text{-post}}$ of less than 7.5 Joules/g, as determined by differential thermoanalysis.

8. Injection-moulded articles obtained by the process according to Claims 1-4, characterised in that they have a post-crystallisation enthalpy $\Delta H_{c\text{-post}}$ of less than 3.5 Joules/g, as determined by differential thermoanalysis.

**Revendications**

1. Procédé de production de pièces moulées en téréphtalate de polyéthylène cristallin par moulage par injection à des températures de moulage de 80 à 120 °C et de préférence de 80 à 110 °C, caractérisé en ce qu'on moule par injection des matières à mouler contenant

I. 70 à 98 % en poids d'un téréphtalate de polyéthylène contenant au moins 80 moles %, par rapport au composant acide dicarboxylique, de restes d'acide téréphtalique et au moins 80 moles %, par rapport au composant diol, de restes d'éthylèneglycol, avec une viscosité relative (mesurée dans un mélange phénol/o-dichlorobenzène (rapport en poids 60 : 40) à 25 °C) de 1,28 à 1,38,

II. 2 à 30 % en poids d'un polymère de greffage de
   (A) 25 à 95 parties en poids d'un copolymère
     (a) de 75 à 99,8 parties en poids d'un acrylate d'alkyle en $C_1$ à $C_6$,
     (b) 0,1 à 5 parties en poids d'un monomère ayant au moins deux doubles liaisons oléfiniques non conjuguées et
     (c) 0 à 40 parties en poids d'autres monomères,
comme support de greffage et
   (B) 75 à 5 parties en poids d'une résine obtenue par polymérisation d'au moins un monomère à non-saturation oléfinique, qui a été préparée en présence de (A) et

III. 0 à 300 % en poids d'un agent de renforcement, les indications de pourcentages en poids se rapportant dans chaque cas à la somme I + II.

2. Procédé suivant la revendication, caractérisé en ce qu'on moule par injection des matières à mouler qui contiennent

80 à 95 % en poids de composant I,
 5 à 20 % en poids de composant II et
 0 à 240 % en poids, par rapport à la somme de I + II, de composant III.

3. Procédé suivant la revendication 1 ou 2, caractérisé en ce qu'on moule par injection des matières à mouler dont le polymère de greffage II est formé de

60 à 95 % en poids de support de greffage (A) et
40 à 5 % en poids de greffe,

le support de greffage étant formé d'un mélange de monomères contenant

95 à 99,8 % en poids d'acrylate de n-butyle,
0,1 à 2,5 % en poids de diacrylate de butylène et
0,1 à 2,5 % en poids de méthacrylate d'allyle ou de maléate de diallyle

et la greffe pouvant être obtenue en proportion de
60 à 100 % en poids à partir de méthacrylate de méthyle et en proportion de
40 à 0 % en poids à partir d'autres monomères.

4. Procédé suivant les revendications 1 à 3, caractérisé en ce qu'on moule par injection des matières à mouler qui contiennent des fibres de verre comme composant III.

5. Des articles moulés par injection obtenus par le procédé suivant les revendications 1 à 4.

6. Articles moulés par injection obtenus par le procédé suivant les revendications 1 à 4, caractérisés en ce qu'ils ont une enthalpie de post-cristallisation $\Delta H_{c\text{-post}}$ de moins de 15 joules/g, déterminée par thermoanalyse différentielle.

7. Articles moulés par injection obtenus par le procédé suivant les revendications 1 à 4, caractérisés en ce qu'ils ont une enthalpie de post-cristallisation $\Delta H_{c\text{-post}}$ de moins de 7,5 joules/g, déterminée par thermoanalyse différentielle.

8. Articles moulés par injection obtenus par le procédé suivant les revendications 1 à 4, caractérisés en ce qu'ils ont une enthalpie de post-cristallisation $\Delta H_{c\text{-post}}$ de moins de 3,5 joules/g, déterminée par thermoanalyse différentielle.